# FASCICULE DE BREVET EUROPEEN

(11) **EP 3 080 687 B1**
(45) Date de publication et mention de la délivrance du brevet: **27.01.2021**
(21) Numéro de dépôt: 14825419.6
(22) Date de dépôt: 10.12.2014
(51) Int. Cl.: B43K 23/08, G06F 3/039

(54) **DISPOSITIF MANUEL ET ENSEMBLE MULTIFONCTIONNEL**
MANUELLE VORRICHTUNG UND MULTIFUNKTIONSANORDNUNG
MANUAL DEVICE AND MULTIFUNCTIONAL ASSEMBLY

(30) Priorité: 10.12.2013 FR 1362375
(43) Date de publication de la demande: 19.10.2016
(73) Titulaire: Société BIC, 92110 Clichy (FR)
(72) Inventeur: BEZ, Arnaud, F-92380 Garches (FR); BOISDEVESYS, David, F-94200 Vitry sur Seine (FR)
(74) Mandataire: Cabinet Beau de Loménie
(86) Numéro de dépôt international: PCT/FR2014/053255
(87) Numéro de publication internationale: WO 2015/086992

(56) Documents cités:
- WO-A1-2012/156090
- WO-A1-2013/091182
- US-A1- 2004 154 172
- US-A1- 2011 273 376
- US-A1- 2012 194 484

## Description

### Arrière-plan de l'invention

L'invention concerne un dispositif manuel avec une extrémité équipée d'un coussinet électriquement conducteur. En contact avec la surface d'un écran capacitif, tel qu'utilisé notamment sur les téléphones portables, les tablettes multimédias ou autres dispositifs informatiques, un tel coussinet conducteur peut créer une distorsion locale du champ électrostatique de cet écran, distorsion pouvant être détectée et localisée par un dispositif de traitement de données, comme par exemple un microprocesseur, de manière à interagir avec des éléments d'une interface graphique d'utilisateur affichée sur cet écran.

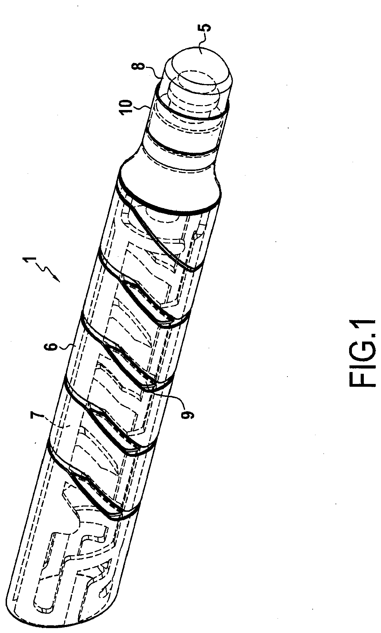

Typiquement, les écrans capacitifs sont orientés à leur utilisation par contact direct de l'utilisateur à travers ses doigts. Toutefois, pour certaines utilisations, des dispositifs manuels analogues à un stylet peuvent être préférables, par exemple par souci de précision. Un tel dispositif manuel peut présenter, comme celui faisant l'objet de la présente divulgation, un coussinet électriquement conducteur, comme par exemple dans US 2012/194484 A1, WO 2013/091182 A1, WO 2012/156090 A1 ou
US 2012/0194484 A1 divulgue, conformément au préambule de la revendication 1, un stylet 100 qui comprend un corps 104 accessible au toucher par un utilisateur ayant une partie externe en plastique et un matériau conducteur qui complète une connexion électrique entre la main 120 d'un utilisateur et un écran tactile 130. En particulier, ce document divulgue une partie de préhension pour les doigts d'un utilisateur, toutefois, cette partie de préhension ne comprend pas d'ouverture (cf. [0016], [0017], [0019], [0023] et [0025], figures 1-3).

WO 2013/091182 A1 divulgue un accessoire comprenant une couche conductrice 20 externe accessible au toucher par un utilisateur et un connecteur 10 formant une structure interne en plastique (cf. [0042]-[0046], figure 6).

WO 2012//156090 A1 enseigne de réaliser au moyen de particules d'une substance conductrice, par exemple de particules de carbone, la connexion électrique entre la zone de préhension et l'extrémité d'un stylet pour écran tactile capacitif; cela permet un libre choix des matériaux pour les différentes pièces du stylet, par exemple complètement ou partiellement en plastique, qui donne de larges possibilités de design pour la forme, le finish de surface, la couleur, etc.; le plastique est aussi bon marché et peut être mis en oeuvre à bas coût; y intégrer des particules de carbone est aussi bon marché.

US 2011/273376 A1 décrit un stylet pour écran tactile et enseigne que des matériaux souples comme les élastomères peuvent être rendus électriquement conducteurs au moyen d'additifs conducteurs qui peuvent être variés dans leur taille, forme et quantité, par exemple de la fibre de carbone, du carbone noir ou en poudre, du graphite ou des nano-matériaux tels que des nano-tubes de carbone.

Un inconvénient d'un tel dispositif manuel dédié est qu'il vient éventuellement en addition d'autres instruments d'écriture du même utilisateur. On entend par « instrument d'écriture », dans ce contexte, tout instrument pouvant servir à tracer manuellement une écriture sur une surface adaptée. Ainsi, parmi les instruments d'écriture, on peut compter par exemple les crayons, plumes, stylos à bille ou feutres, et même les stylets adaptés. Tous ces instruments d'écriture ont typiquement une forme allongée entre une extrémité avant présentant une pointe d'écriture et une extrémité arrière opposée en direction longitudinale. Cette forme allongée permet ainsi la prise d'une partie avant de l'instrument d'écriture, à proximité de la pointe d'écriture, entre les bouts du pouce et d'au moins un des doigts index et majeur, pendant qu'une partie arrière est soutenue dans l'angle de préhension entre le pouce et le doigt index pour stabiliser l'instrument d'écriture dans la main. Or, l'encombrement de tous ces outils cumulés est un inconvénient notable pour l'utilisateur.

### Objet et résumé de l'invention

L'invention vise à remédier à ces inconvénients. En particulier, la présente divulgation vise à proposer un dispositif manuel équipé d'un coussinet électriquement conducteur, pouvant être facilement fixé sur l'extrémité arrière d'un autre instrument d'écriture pour former un ensemble multifonctionnel ergonomique.

Dans un tel dispositif manuel suivant au moins un mode de réalisation de l'invention, ce but est atteint grâce à ce que ce dispositif manuel, qui présente une première extrémité ouverte, adaptée à recevoir une extrémité arrière d'un instrument d'écriture en direction longitudinale, et une seconde extrémité, opposée à la première extrémité en direction longitudinale et équipée d'un coussinet électriquement conducteur, comprend, entre la première et la deuxième extrémité, une partie externe élastomère autour d'une structure interne électriquement conductrice, ladite structure interne formant une connexion électrique entre ledit coussinet et au moins une surface conductrice de la structure interne affleurant à travers une ouverture dans une surface de préhension de ladite partie externe. Dans ce contexte, « affleurant » doit être compris, dans un sens large, comme impliquant que la surface conductrice de la structure interne est accessible au toucher à travers cette ouverture. Par contre, ceci n'implique pas que la surface conductrice de la structure interne soit nécessairement à exactement le même niveau que la surface de préhension autour de l'ouverture : la surface conductrice de la structure interne pourra être au même niveau, au moins légèrement en retrait et/ou au moins légèrement en saillie par rapport à la surface de préhension autour de l'ouverture.

Grâce à ces dispositions, on obtient une souplesse radiale du dispositif manuel permettant d'emmancher à force des instruments d'écriture de diamètres et sections variés dans le dispositif manuel à travers sa première extrémité. La structure interne renforce le dispositif, tout en fournissant un contact électrique entre le coussinet et les doigts de l'utilisateur, contact permettant de mieux reproduire la distorsion du champ électrostatique d'un écran capacitif causée par un contact direct avec les doigts de l'utilisateur, contact électrique qui serait autrement difficile à établir à travers le matériau élastomère de la partie externe, qui fournit néanmoins une surface de préhension particulièrement agréable et ergonomique.

Afin d'assurer un coût de production limité de ladite structure interne, celle-ci peut être en polymère chargé en particules électriquement conductrices. Ce polymère peut notamment être thermoplastique. Pour une meilleure efficacité, ces particules peuvent en particulier être des nanoparticules. Pour une production rapide et économique, ledit corps principal peut être produit par moulage-injection. En utilisant un élastomère thermoplastique pour la partie externe, celle-ci peut être facilement surmoulée autour de la structure interne.

Pour assurer la souplesse radiale de la structure interne, celle-ci peut comprendre au moins une paire d'éléments reliés par au moins une lame flexible coudée. Comme une telle lame flexible coudée peut fléchir autour de deux axes distincts, elle permet un déplacement relatif entre les deux éléments de cette paire. En particulier, la structure interne peut comprendre un embout adjacent au coussinet et une paire d'éléments ayant chacun deux branches parallèles orientées en direction longitudinale, les deux branches de chacun de ces deux éléments étant reliées audit embout par une base commune, une branche d'un premier élément de ladite paire étant reliée à une branche d'un deuxième élément de ladite paire par une lame flexible coudée, l'autre branche du premier élément étant reliée à l'autre branche du deuxième élément par une autre lame flexible coudée, et les deux branches du premier élément étant aussi reliées entre elles par une lame flexible du côté de la première extrémité du dispositif. Une telle configuration de la structure interne permet d'optimiser sa souplesse radiale pour permettre l'emmanchement à force d'instruments d'écriture de sections et diamètres très variés à l'intérieur de ce dispositif manuel.

La présente divulgation a également rapport à un ensemble multifonctionnel comprenant un tel dispositif manuel et un instrument d'écriture avec une extrémité avant présentant une pointe d'écriture et une extrémité arrière emmanchée à force à travers la première extrémité du dispositif manuel.

### Brève description des dessins

L'invention sera bien comprise et ses avantages apparaîtront mieux, à la lecture de la description détaillée qui suit, de modes de réalisation représenté à titre d'exemples non limitatifs. La description se réfère aux dessins annexés sur lesquels :
- la figure 1 est une vue en perspective d'un dispositif manuel suivant un premier mode de réalisation ;
- les figures 2A à 2C sont des différentes vues en perspective de la structure interne du dispositif manuel de la figure 1 ;
- la figure 3 est une coupe longitudinale d'un ensemble multifonctionnel formé par le dispositif manuel de la figure 1, et un instrument d'écriture emmanché à force dans ce dispositif manuel ; et
- les figures 4 et 5 sont des vues en perspective de dispositifs manuels suivant des modes de réalisation alternatifs.

### Description détaillée de l'invention

La figure 1 illustre un dispositif manuel 1 en forme de capuchon allongé, s'étendant en direction longitudinale entre une première extrémité ouverte et une seconde extrémité présentant un coussinet souple 5 électriquement conducteur, par exemple en polymère de silicone chargé avec du noir de carbone.

Le dispositif manuel 1 comprend une partie externe 6 élastomère surmoulée autour d'une structure interne 7, et un connecteur 8 qui connecte la structure interne 7 au coussinet souple 5. Une bague 10 protège la base du connecteur 8. Le connecteur 8 et la structure interne 7 peuvent être électriquement conducteurs, de manière à former une connexion électrique entre le coussinet souple 5 et des surfaces conductrices 9 de la structure interne 7 affleurant à travers des ouvertures correspondantes dans une surface de préhension de la partie externe 6. Afin d'obtenir cette conductivité électrique, le connecteur 8 est en polymère de silicone chargé en particules conductrices, par exemple des nanotubes de carbone d'environ 9,5 nm de diamètre et 1,5 µm de longueur, et la structure interne 7 peut être en un matériau tel qu'un polymère thermoplastique chargé aussi en particules conductrices, et plus particulièrement des nanotubes de carbone de diamètre 9.5 nanomètre et de longueur 1.5 micron. L'utilisation d'un tel polymère permet aussi une production économique en grande série par moulage-injection. Grâce aux surfaces conductrices 9, la partie externe 6 peut être en matériau diélectrique, par exemple en élastomère thermoplastique conventionnel permettant aussi son surmoulage autour de la structure interne 7.

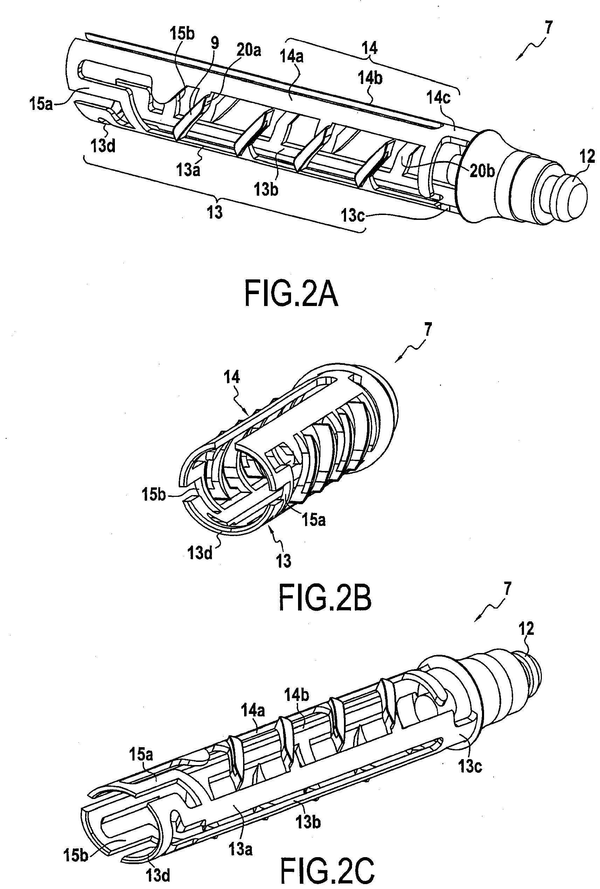

Alors que le matériau élastomère de la partie externe 6 est comparativement souple afin notamment de rendre le dispositif manuel 1 plus agréable au toucher, celui de la structure interne 7 est normalement plus rigide. La structure interne 7 présente donc une configuration géométrique destinée à augmenter sa souplesse radiale, et ainsi faciliter l'emmanchement à force d'un instrument d'écriture dans le dispositif manuel 1. Ainsi, comme illustré en particulier par les figures 2A à 2C, la structure interne 7 présente une forme particulière destinée à offrir une grande flexibilité radiale. Plus spécifiquement, cette chemise interne 7 comprend un embout 12 et une paire d'éléments 13,14, dont chacun présente deux branches parallèles orientées en direction longitudinale. L'embout 12 est adjacent au coussinet 5 et présente une rainure annulaire 13 pour l'ancrage du connecteur 8. Les deux branches 13a,13b du premier élément 13 sont reliées à l'embout 12 par une base commune 13c plus étroite, donnant à ce premier élément 13 une forme en diapason. De la même manière, les deux branches 14a,14b du deuxième élément 14 sont également reliées à l'embout 12 par une base commune 14c plus étroite, donnant à ce deuxième élément une forme similaire en diapason. A l'autre extrémité de la chemise interne 7, la branche 13a du premier élément 13 est reliée à la branche 14a du deuxième élément 14 par une lame flexible coudée 15a, et la branche 13b du premier élément 13 est reliée à la branche 14b du deuxième élément 14 par une autre lame flexible coudée 15b. Finalement, les deux branches 13a,13b du premier élément 13 sont aussi reliées entre elles à l'extrémité opposée à leur base commune 13c par une lame flexible 13d, contrairement aux deux branches 14a,14b du deuxième élément.

Dans le mode de réalisation illustré, les surfaces conductrices 9 sont situées entre le premier élément 13 et le deuxième élément 14. Plus spécifiquement, elles sont situées, entre la branche 13a du premier élément 13 et la branche 14a du deuxième élément 14, sur des bras 20a partant alternativement de la branche 13a ou de la branche 14a et, entre la branche 13b du premier élément 13 et la branche 14b du deuxième élément 14, sur des bras 20b partant alternativement de la branche 13b ou de la branche 14b.

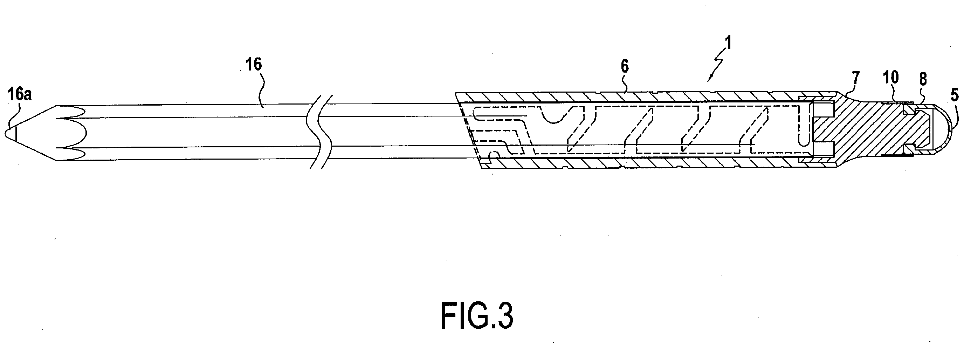

Chacun des segments droits des lames flexibles 15a,15b et 13d ainsi que la base 13c du premier segment 13 et la base 14c du second segment 14 introduisant un point de flexion autour d'un axe différent, cette configuration permet d'optimiser la flexibilité radiale de la structure interne 7 pour faciliter l'emmanchement à force, à l'intérieur de cette structure interne 7 de l'extrémité arrière d'un instrument d'écriture 16 présentant une pointe d'écriture 16a à son extrémité avant, comme illustré notamment sur la figure 3.

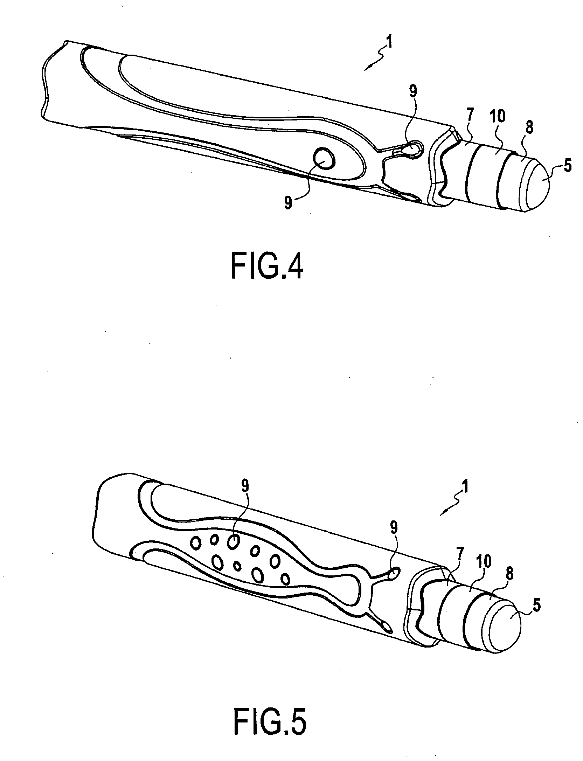

Un tel dispositif manuel peut être réalisé sous une multiplicité de formes différentes, notamment en ce qui concerne la configuration de la surface de préhension et des surfaces conductrices affleurant à travers des orifices dans cette surface de préhension. Les figures 4 et 5 illustrent deux autres modes de réalisation avec des telles configurations alternatives. Les éléments analogues ou équivalents à ceux du premier mode de réalisation reçoivent les mêmes chiffres de référence sur ces deux figures.

Quoique la présente invention ait été décrite en se référant à un exemple de réalisation spécifique, il est évident que différentes modifications et changements peuvent être effectués sur ces exemples.

En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif. La portée de l'invention est définie par les revendications annexées.

## Revendications

1. Dispositif manuel (1) avec une première extrémité ouverte, adaptée à recevoir une extrémité arrière d'un instrument d'écriture (16) en direction longitudinale, une seconde extrémité, opposée à la première extrémité en direction longitudinale et équipée d'un coussinet (5) électriquement conducteur, ledit dispositif manuel comprenant, entre la première et la deuxième extrémité, une partie externe (6) élastomère et une structure interne (7) électriquement conductrice, ladite structure interne (7) formant une connexion électrique entre ledit coussinet (5) et au moins une surface conductrice (9) de la structure interne (7), ledit dispositif manuel (1) étant **caractérisé en ce que** ladite surface conductrice de la structure interne (9) affleure à travers une ouverture dans une surface de préhension de ladite partie externe (6).

2. Dispositif manuel (1) suivant la revendication 1, dans laquelle ladite structure interne (7) est en polymère chargé en particules conductrices.

3. Dispositif manuel (1) suivant la revendication 2, dans laquelle lesdites particules conductrices sont des nanoparticules.

4. Dispositif manuel (1) suivant l'une quelconque des revendications précédentes, dans lequel ladite structure interne (7) comprend au moins une paire d'éléments (13,14) reliés par au moins une lame flexible coudée (15a,15b).

5. Dispositif manuel (1) suivant la revendication 4, dans lequel ladite structure interne (7) comprend un embout (12) adjacent au coussinet (5) et une paire d'éléments (13,14) ayant chacun deux branches parallèles (13a,13b ;14a,14b) orientées en direction longitudinale, les deux branches (13a,13b ;14a,14b) de chacun de ces deux éléments (13,14) étant reliées audit embout par une base commune (13c,14c), une branche (13a) d'un premier élément (13) de ladite paire étant reliée à une branche (14a) d'un deuxième élément (14) de ladite paire par une lame flexible coudée (15a), l'autre branche (13b) du premier élément (13) étant reliée à l'autre branche (14b) du deuxième élément (14) par une autre lame flexible coudée (15b), et les deux branches (13a,13b) du premier élément (13) étant aussi reliées entre elles par une lame flexible (13d) du côté de la première extrémité du dispositif (1).

6. Ensemble multifonctionnel comprenant un dispositif manuel (1) suivant l'une quelconque des revendications 1 à 5, et un instrument d'écriture (16) allongé, avec une extrémité avant présentant une pointe d'écriture (16a) et une extrémité arrière emmanchée à force à travers ladite première extrémité du dispositif manuel (1).

## Patentansprüche

1. Manuelle Vorrichtung (1) mit einem offenen ersten Ende, das geeignet ist, ein hinteres Ende eines Schreibinstruments (16) in Längsrichtung aufzunehmen, und einem zweiten Ende, das dem ersten Ende in Längsrichtung gegenüberliegt und das mit einer elektrisch leitenden Auflage (5) versehen ist, wobei die genannte manuelle Vorrichtung zwischen dem ersten und dem zweiten Ende einen elastomeren äußeren Teil (6) und eine elektrisch leitende innere Struktur (7) umfasst, wobei die innere Struktur (7) eine elektrische Verbindung zwischen der Auflage (5) und mindestens einer leitenden Oberfläche (9) der inneren Struktur (7) bildet, wobei die manuelle Vorrichtung (1) **dadurch gekennzeichnet ist, dass** die leitende Oberfläche der inneren Struktur (9) durch eine Öffnung in einer Greiffläche des äußeren Teils (6) zum Vorschein kommt.

2. Manuelle Vorrichtung (1) nach Anspruch 1, wobei die innere Struktur (7) aus einem mit leitfähigen Teilchen gefüllten Polymer besteht.

3. Manuelle Vorrichtung (1) nach Anspruch 2, wobei die leitfähigen Teilchen Nanopartikel sind.

4. Manuelle Vorrichtung (1) nach einem der vorhergehenden Ansprüche, wobei die innere Struktur (7) mindestens ein Paar von Elementen (13, 14) umfasst, die durch mindestens eine gebogene flexible Lamelle (15a, 15b) verbunden sind.

5. Manuelle Vorrichtung (1) nach Anspruch 4, wobei die innere Struktur (7) eine Endkappe (12) neben der Auflage (5) und ein Paar von Elementen (13, 14) umfasst, die jeweils zwei parallele, in Längsrichtung ausgerichtete Schenkel (13a, 13b; 14a, 14b) aufweisen, wobei die beiden Schenkel (13a, 13b; 14a, 14b) parallel zueinander sind und die gleiche Länge haben, wobei jedes dieser beiden Elemente (13, 14) durch eine gemeinsame Basis (13c, 14c) mit der Spitze verbunden ist, wobei ein Schenkel (13a) eines ersten Elements (13) des Paars mit einem Schenkel (14a) eines zweiten Elements (14) des Paars durch eine flexible gebogene Lamelle (15a) verbunden ist, wobei der andere Schenkel (13b) des ersten Elements (13) mit dem anderen Schenkel (14b) des zweiten Elements (14) durch eine weitere gebogene flexible Lamelle (15b) verbunden ist, und wobei die beiden Schenkel (13a, 13b) des ersten Elements (13) ebenfalls durch eine flexible Lamelle (13d) am ersten Ende der Vorrichtung (1) miteinander verbunden sind.

6. Multifunktionelle Einheit, umfassend eine manuelle Vorrichtung (1) nach einem der Ansprüche 1 bis 5 und ein längliches Schreibgerät (16) mit einem vorderen Ende, das eine Schreibspitze (16a) aufweist, und einem hinteren Ende, das durch das eine Ende der manuellen Vorrichtung (1) eingepresst ist.

## Claims

1. Manual device (1), comprising an open first end suitable for receiving a rear end of a writing instrument (16) in a longitudinal direction, and a second end which is opposite the first end in the longitudinal direction and equipped with an electrically conductive pad (5), said manual device comprising, between the first and the second end, an outer part (6) made of elastomer and an electrically conductive inner structure (7), said inner structure (7) forming an electrical connection between said pad (5) and at least one conductive surface (9) of the inner structure (7), said manual device (1) being **characterized in that** said conductive surface of the inner structure (9) is exposed through an opening in a gripping surface of said outer part (6).

2. Manual device (1) according to claim 1, wherein said inner structure (7) is made of a polymer filled with conductive particles.

3. Manual device (1) according to claim 2, wherein said conductive particles are nanoparticles.

4. Manual device (1) according to any of the preceding claims, wherein said inner structure (7) comprises at least one pair of elements (13, 14) connected by at least one angled flexible strip (15a, 15b).

5. Manual device (1) according to claim 4, wherein said inner structure (7) comprises an end piece (12) adjacent to the pad (5), and a pair of elements (13, 14) each having two parallel branches (13a, 13b; 14a, 14b) oriented in the longitudinal direction, the two branches (13a, 13b; 14a, 14b) of each of these two elements (13, 14) being connected to said end piece by a common base (13c, 14c), one branch (13a) of a first element (13) of said pair being connected to one branch (14a) of a second element (14) of said pair by an angled flexible strip (15a), the other branch (13b) of the first element (13) being connected to the other branch (14b) of the second element (14) by another angled flexible strip (15b), and the two branches (13a, 13b) of the first element (13) also being connected to one another by a flexible strip (13d) on the side of the first end of the device (1).

6. Multi-functional assembly comprising a manual device (1) according to any of claims 1 to 5, and an elongate writing instrument (16), comprising a front end having a writing tip (16a) and a rear end which is force-fitted through said first end of the manual device (1).
